# EUROPÄISCHE PATENTSCHRIFT

(11) **EP 2 511 559 B1**
(45) Veröffentlichungstag und Bekanntmachung des Hinweises auf die Patenterteilung: **15.01.2014**
(21) Anmeldenummer: 11003152.3
(22) Anmeldetag: 14.04.2011
(51) Int. Cl.: F16D 65/12, F16B 35/04, F16B 43/00

(54) **Vorrichtung und Verfahren zur Verbindung eines ersten Bauteils mit einem zweiten Bauteil**
Device and method for connecting one component with a second component
Dispositif et procédé de liaison d'un premier composant avec un second composant

(43) Veröffentlichungstag der Anmeldung: 17.10.2012
(73) Patentinhaber: Gigant-Trenkamp & Gehle GmbH, 49413 Dinklage (DE)
(72) Erfinder: Barlage, Wilfried, 49626 Berge (DE); Krieg, Tobias, 49134 Wallenhorst - Hollage (DE)
(74) Vertreter: Weeg, Thomas

(56) Entgegenhaltungen:
- DE-A1- 10 262 070
- DE-A1- 19 617 154
- DE-U1- 20 221 132
- US-A1- 2008 080 952

## Beschreibung

Die vorliegende Erfindung bezieht sich auf eine Vorrichtung sowie auf ein Verfahren zur Verbindung eines ersten Bauteils mit einem zweiten Bauteil mittels eines Schraubbolzens und einer mit dem Schraubbolzen verbundenen Kontermutter, wobei der Schraubbolzen durch einen im ersten Bauteil befindlichen Aufnahmekanal hindurch geführt ist, der Schraubbolzen sich in seiner Verbindungsstellung an dem ersten Bauteil und die Kontermutter sich an dem ersten und/oder zweiten Bauteil abstützt.

Aus dem Stand der Technik ist es bekannt, Trommelbremsen in Fahrzeugen mit einem drehfest auf einer Nockenwelle angeordneten Nocken zu betätigen. Ein Beispiel hierfür findet sich in der Schrift DE 10 2008 051 254 A1. In den Bremsträgem und ihrer Einbauumgebung ist der verfügbare Einbauraum sehr begrenzt. Insbesondere ist es schwierig, in diesen begrenzten Einbauräumen Nockenwellen zu montieren. Häufig ist ein Montagewerkzeug wie beispielsweise ein Schraubendreher oder ein Schraubenschlüssel nur von einer Seite hereinsetzbar.

Aus den Schriften DE 202 21 132 U1 und DE 3318 288 C2 ist es bekannt, zwei einzelne Bauteile durch einen Schraubbolzen miteinander zu verbinden. In der erstgenannten Schrift wird vorgeschlagen, eine Tellerfeder zu verwenden. Die zweitgenannte Schrift offenbart den Einsatz einer Spannhülse, um eine gesicherte Verbindung der beiden Bauteile miteinander herzustellen. Allerdings ist diesen Schriften nicht entnehmbar, wie eine Schraubbolzenverbindung in beengten Einbauverhältnissen herstellbar ist.

Es ist die Aufgabe der vorliegenden Erfindung, eine Vorrichtung zur Verbindung eines ersten Bauteils mit einem zweiten Bauteil mittels eines Schraubbolzens zu schaffen, bei dem wenig Raum für den Ansatz von Werkzeugen benötigt wird.

Die Aufgabe wird für eine erfindungsgemäße Vorrichtung gelöst, indem das erste Bauteil Anlageflächen zur Anlage von Oberflächen der Kontermutter, durch die eine Drehbewegung der Kontermutter bei einer Drehbewegung des Schraubbolzens formschlüssig blockiert ist, sowie eine stimseitige Stützfläche aufweist, am Außenumfang der Kontermutter ein Vorsprung ausgebildet ist, mit einer Anzugsbewegung des Schraubbolzens der Vorsprung auf die Stützfläche zu beweglich ist und zwischen dem Vorsprung und der Stützfläche eine Sicherungsscheibe mit in einem Vormontagezustand schräg zur Längsachse des Schraubbolzens angestellten Scheibenflächen angeordnet ist, wobei die Sicherungsscheibe in der Verbindungsstellung eine abgeflachte Form mit einem vergrößerten Außendurchmesser aufweist.

Die Aufgabe wird für ein erfindungsgemäßes Verfahren gelöst, indem beim Verschrauben des Schraubbolzens mit der Kontermutter diese von im ersten Bauteil vorhandenen Anlageflächen formschlüssig gegen eine Drehbewegung der Kontermutter bei einer Drehbewegung des Schraubbolzens blockiert wird, mit einer Anzugsbewegung des Schraubbolzens ein am Außenumfang der Kontermutter ausgebildeter Vorsprung gegen eine stimseitige Stützfläche am ersten Bauteil bewegt wird und bei dieser Bewegung eine zwischen dem Vorsprung und der Stützfläche angeordnete Sicherungsscheibe mit in einem Vormontagezustand schräg zur Längsachse des Schraubbolzens angeordneten Scheibenflächen außendurchmesservergrößemd gestaucht wird und die Sicherungsscheibe in der Verbindungsstellung eine abgeflachte Form mit einem gegenüber dem Vormontagezustand vergrößerten Außendurchmesser aufweist.

Durch die erfindungsgemäße Vorrichtung und das erfindungsgemäße Verfahren ist es möglich, zwei Bauteile miteinander durch einen Schraubbolzen zu verbinden, ohne dass die Kontermutter mit einem Schraubenschlüssel gegengehalten werden muss. Die Kontermutter wird vielmehr formschlüssig durch die Anlageflächen gegen ein Mitdrehen blockiert. Dadurch ist es möglich, den Schraubbolzen nur mit einem Schraubenzieher anzuziehen. Die Seite der Bauteile, auf denen die Kontermutter angeordnet ist, muss nicht mehr zugänglich sein für zusätzliche Werkzeuge, und es ist auch nicht mehr erforderlich, einen Bauraum frei zu halten, in den eine menschliche Hand hinein greifen kann,

Ein zusätzlicher Sicherungseffekt ergibt sich durch die besonders gestaltete Sicherungsscheibe. Die Sicherungsscheibe verfügt in ihrem Vormontagezustand über schräg angeordnete Scheibenflächen, durch die sich ein vergleichsweise geringer Außendurchmesser ergibt. Mit diesem vergleichsweise geringen Außendurchmesser kann die Sicherungsscheibe zusammen mit dem ersten Bauteil in oder durch eine Aufnahmeöffnung im zweiten Bauteil eingeschoben werden, ohne dass die Sicherungsscheibe dabei mit einem Teil des zweiten Bauteils kollidiert. Die Sicherungsscheibe liegt in der Vormontagestellung einseitig auf der Stirnfläche auf und sie liegt mit ihrer anderen Seite an dem Vorsprung an. Wird diese Sicherungsscheibe nun beim weiteren Anziehen des Schraubbolzens über den Vorsprung zunehmend auf die Stirnfläche gepresst, verformt sich die Sicherungsscheibe. Die Scheibenflächen werden dabei in eine flachere Form gepresst, wodurch sich ihr Außenumfang vergrößert. Mit dem vergrößerten Außendurchmesser hat die Sicherungsscheibe jedoch eine Größe erreicht, mit der sie nicht mehr zerstörungsfrei entgegen der Einführungsrichtung aus der Verbindungsstellung durch die Aufnahmeöffnung hindurch wieder entfernt werden kann, wenn der freie Querschnitt der Aufnahmeöffnung kleiner ist als der Außendurchmesser der Sicherungsscheibe nach ihrer Verformung. Die Kontermutter und die Sicherungsscheibe sind bei einer maßlichen Abstimmung der Sicherungsscheibe und des freien Querschnitts der Aufnahmeöffnung so gegen ein ungewolltes Herausziehen der Kontermutter aus der Verbindungsstellung geschützt.

Möchte man die Schraubverbindung wieder lösen, genügt es, den Schraubbolzen loszuschrauben. Die Kontermutter und die Sicherungsscheibe können dann der Schwerkraft folgend nach unten fallen, wenn sie vom Schraubbolzen gelöst sind. Auch für ein Lösen der Schraubverbindung muss der Bauraum nicht auf der dem Schraubkopf des Schraubbolzens abgewandten Seite im Bereich der Kontermutter für Werkzeug oder Hand zugänglich sein.

Die Anlageflächen können beliebig ausgestattet sein, beispielsweise als Sperrbolzen oder Wandung. Bei einer beispielhaften Sechskant-Kontermutter kann die Drehbewegung durch Anlageflächen blockiert sein, die in den Hüllkreis der Kontermutter hineinragen. Die Anlageflächen müssen sich nicht über die gesamte Höhe der Kontermutter erstrecken, es kann auch genügen, nur eine Teilhöhe zu blockieren.

Diese erfindungsgemäße Verbindungstechnik kann in beliebigen Bauteilen verwendet werden, in denen der Zugang zu der Schraubbolzenverbindung zumindest von einer Seite her wegen eines engen Bauraums im Umgebungsbereich schwierig oder unmöglich ist. Die Sicherungsscheibe muss von ihrem Material und ihrer Dicke her so bemessen sein, dass sie noch eine leichte Verarbeitbarkeit und Verformbarkeit durch die Schraubbewegung ermöglicht, andererseits aber auch die an sie gestellten Festigkeitsanforderungen erfüllt. Für den Anwendungsfall der Montage einer Nockenwelle in einer Trommelbremse, in der der Bauraum von einer Seite her nur einschränkt zugänglich ist, ermöglicht die erfindungsgemäße Lösung einen Einbau der Nockenwelle mit nur einem Werkzeug, das nur von einer Seite angesetzt werden muss.

Nach einer Ausgestaltung der Erfindung sind die Anlageflächen von den Seitenwänden eines Aufnahmeraums zur Aufnahme zumindest eines Teils der Kontermutter gebildet. Bei dieser Ausgestaltung kann in das erste Bauteil ein Aufnahmeraum eingegossen, ausgefräst oder auf sonstige Weise ausgebildet sein, für den keine weiteren Bauteile erforderlich sind. Die Montage der Vorrichtung ist dadurch einfach. Die Kontermutter kann bei passender Gestaltung über ihren gesamten Umfang im Aufnahmeraum gehalten sein, wodurch sich ein besonders fester Sitz ergibt.

Nach einer Ausgestaltung der Erfindung ist der Aufnahmeraum exzentrisch zur Längsmittelachse des Schraubbolzens im Aufnahmekanal angeordnet und die Kontermutter weist eine zum exzentrischen Aufnahmeraum passend geformte Umfangsform auf. Die exzentrische Anordnung blockiert die Kontermutter bei einer Drehbewegung des Schraubbolzens.

Nach einer Ausgestaltung der Erfindung ist der Vorsprung als umlaufender Ring ausgestaltet. Der Ring kann über den gesamten Umfang der Kontermutter hinweg gleichmäßig die Biegekräfte auf die Sicherungsscheibe übertragen, wodurch sich eine gleichmäßige Verformung der Sicherungsscheibe einstellt.

Nach einer Ausgestaltung der Erfindung weist das erste Bauteil im Verbindungsbereich mit dem zweiten Bauteil ein Keilwellenprofil auf, das in eine im zweiten Bauteil befindliche Einstecköffnung eingesteckt ist, das zweite Bauteil weist eine in das Keilwellenprofil passende Innenverzahnung auf, und die Sicherungsscheibe weist einen Außendurchmesser auf, der im Vormontagezustand kleiner und in der Verbindungsstellung größer ist als der Abstand gegenüberliegender Zahngründe des Keilwellenprofils. Durch diese Ausgestaltung ist es möglich, eine drehfeste Verbindung des ersten mit dem zweiten Bauteil zu schaffen, die hohe Stellkräfte zu übertragen vermag. Die Keilwellenverzahnung ist geeignet, große Kräfte von einem in das andere Bauteil zu übertragen. Da die auf das Keilwellenprofil einwirkenden Kräfte in Richtung der Zahnflanken der Keilwellenverzahnung wirken, ist die Sicherungsscheibe nur dazu erforderlich, die beiden Bauteile gegen einen seitlichen Versatz abzusichern. Dies ist mit der Sicherungsscheibe gut möglich. Um die Sicherungsscheibe jedoch durch die Einstecköffnung von einer Seite her hindurch zu bekommen, muss der Außendurchmesser der Sicherungsscheibe im Vormontagezustand kleiner sein als der Abstand gegenüberliegender Zahngründe des Keilwellenprofils voneinander.

Nach einer Ausgestaltung der Erfindung sind das erste Bauteil eine Nockenwelle einer Trommelbremse und das zweite Bauteil ein Gestängesteller. Der an der Nockenwelle befestigte Nocken ist drehbar in einem Bremsträger gelagert. Trotz der engen Einbauverhältnisse in einem Trommelbremsgehäuse ist es möglich, die Nockenwelle mit dem Gestängesteller mit der erfindungsgemäßen Vorrichtung von nur einer Seite des Bremsträgers aus dauerhaft und sicher zu verbinden und bei Bedarf auch wieder zu lösen.

Es wird ausdrücklich darauf hingewiesen, dass die vorstehend beschriebenen Ausgestaltungen der Erfindungen jede für sich mit dem Gegenstand des Hauptanspruchs und anderer Ausgestaltungen kombinierbar ist, soweit sich aus dieser Beschreibung und den Ansprüchen nichts Gegenteiliges ergibt. Das gilt auch für einzelne Merkmale, die zu den einzelnen Ausgestaltungen genannt sind.

Weitere Abwandlungen und Details lassen sich der nachfolgenden gegenständlichen Beschreibung und der beigefügten Zeichnung entnehmen.

Die Erfindung soll nun anhand eines Ausführungsbeispiels näher beschrieben werden. Es zeigen:
- Fig. 1:: eine Querschnittsansicht durch eine Bauteilverbindung,
- Fig. 2:: eine Explosionszeichnung der in Fig. 1 miteinander verbauten Bauteile,
- Fig. 3:: eine vergrößerte Ansicht des Ausschnitts A aus Fig. 1 mit der Kontermutter in der Verbindungsstellung, und
- Fig. 4:: den in Fig. 3 dargestellten Ausschnitt mit der Sicherungsscheibe in einem Vormontagezustand.

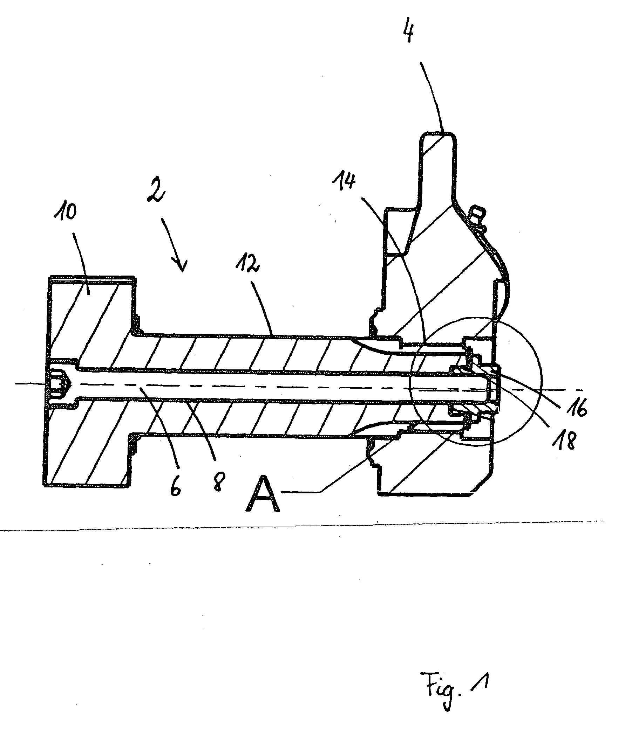

In Figur 1 ist ein Zusammenbau eines ersten Bauteils 2 mit einem zweiten Bauteil 4 gezeigt. Der Schraubbolzen 6 ist durch den Aufnahmekanal 8 im ersten Bauteil 2 hindurchgeführt. Das erste Bauteil 2 ist im Ausführungsbeispiel eine Nockenwelle, die einen Nocken 10 sowie einen Wellenabschnitt 12 aufweist. Auf der dem Nocken 10 abgewandten Ende des Wellenabschnitts 12 ist ein Keilwellenprofil 14 in den Wellenabschnitt 12 eingearbeitet.

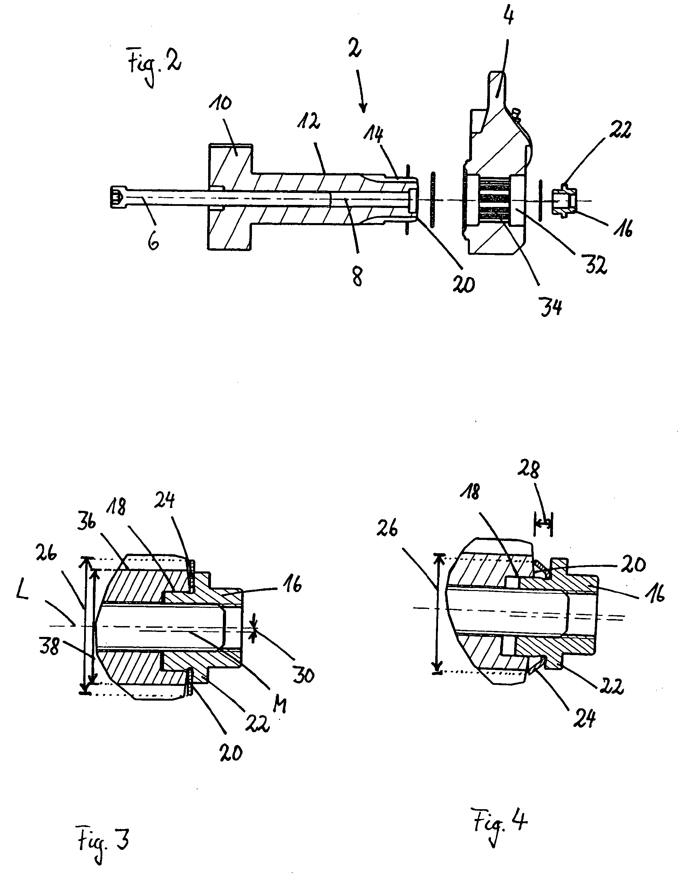

Der Schraubbolzen 6 ist an diesem Ende des Wellenabschnitts 12 mit einer Kontermutter 16 verschraubt. Am Ende des Wellenabschnitts 12 befindet sich eine Einsenkung, deren Seitenwände eine Anlagefläche 18 bilden. Die Umfangsfläche der Kontermutter 16 stützt sich zumindest teilweise auf der Anlagefläche 18 ab, wie dies insbesondere der vergrößerten Darstellung in den Fig. 3 und 4 zu sehen ist.

In Fig. 2 sind die in Fig. 1 dargestellten Bauteile in einer Explosionszeichnung dargestellt. In dieser Ansicht sind die einzelnen Bauteile noch besser erkennbar. Der Schraubbolzen 6 ist in Fig. 2 in einer teilweise aus dem Aufnahmekanal 8 herausgezogenen Position gezeigt. Zur Herstellung einer Verbindung mit der Kontermutter 16 muss der Schraubbolzen 6 vollständig in den Aufnahmekanal 8 eingeschoben werden. Sodann kann das zweite Bauteil 4 mit der Innenverzahlung 34 auf das Keilwellenprofil 14 aufgeschoben werden. Das mit dem Keilwellenprofil 14 versehene Ende des Wellenabschnitts wird dazu in die Einstecköffnung 32 eingeführt und durchgeschoben. Die Kontermutter 16 mit dem Vorsprung 22, der als umlaufender Ring ausgebildet ist, kann sodann mit dem Schraubbolzen 6 verschraubt werden.

Fig. 3 zeigt den Bereich der Verschraubung in einer vergrößerten Ansicht. In Fig. 3 ist die Verschraubung in der Verbindungsstellung gezeigt, während in Fig. 4 die Verschraubung mit einer Sicherungsscheibe 24 in einem Vormontagezustand dargestellt ist. In der in Fig. 3 gezeigten Verbindungsstellung ist der Außendurchmesser 26 der Sicherungsscheibe 24 größer als der Abstand 38 von gegenüberliegenden Zahngründen 36 des Keilwellenprofils 14. Durch das Übermaß der Sicherungsscheibe 24 wird die Innenverzahnung 34 des zweiten Bauteils 4 blockiert, sich aus dem Keilwellenprofil 14 zu lösen und seitlich herauszufallen. Da die Längsmittelachse L des Schraubbolzens 6 und des Aufnahmekanals 8 das Maß der Exzentrizität 30 zur Mittelachse M des Aufnahmeraums versetzt ist, ist die Kontermutter 16 bei einer Drehbewegung des Schraubbolzens 6 an einem Mitdrehen gehindert. Die Exzentrizität 30 stellt auf diese Weise eine Verdrehsicherung der Kontermutter 16 beim Anziehen des Schraubbolzens 6 dar.

In Fig. 4 ist die Sicherungsscheibe 24 in ihrem Vormontagezustand gezeigt. In dem Vormontagezustand sind die Seitenflächen der Sicherungsscheibe 24 schräg zur Längsmittelachse L des Schraubbolzens 6 und des Wellenabschnitts 12 angestellt. Durch die Schrägstellung der Scheibenflächen der Sicherungsscheibe 24 verfügt die Sicherungsscheibe 24 über einen Spreizweg 28, um den sich die Höhe der Sicherungsscheibe 24 beim Anziehen des Schraubbolzens 6 verringern kann. Dadurch, dass die Scheibenflächen der Sicherungsscheibe 24 nach dem Festschrauben des Schraubbolzens 6 rechtwinklig zur Längsmittelachse L ausgerichtet sind, hat sich der Außendurchmesser 26 von dem in Fig. 4 gezeigten Maß auf das in Fig. 3 gezeigte Maß erweitert. Beim Festschrauben des Schraubbolzens 6 wird die Sicherungsscheibe 24 durch die sich auf die Stützfläche 20 zu bewegende Kontermutter 16 mit dem Vorsprung 22 auf die Stützfläche 20 gedrückt. Bei zunehmendem Druck wandern die Außenkanten der Sicherungsscheibe 24 über die Stützfläche 20 nach außen. In der Verbindungsstellung kann die Sicherungsscheibe 24 wie im Ausführungsbeispiel gezeigt; nur auf der Stützfläche 20 aufliegen. Es ist jedoch auch möglich, dass die Stützfläche 20 auf Teilen des zweiten Bauteils 4 ganz oder zumindest teilweise aufliegt.

Die Erfindung ist nicht auf die vorliegende gegenständliche Beschreibung anhand eines Ausführungsbeispiels beschränkt. Dem Fachmann bereitet es keine Schwierigkeiten, unter Beibehaltung der erfindungsgemäßen Lehre offenbarte Bauteile abzuändern oder diese durch gleich wirkende Alternativen zu ersetzen, wenn ihm dies aufgrund konkreter Einbaugegebenheiten sinnvoll erscheint.

## Patentansprüche

1. Vorrichtung zur Verbindung eines ersten Bauteils (2) mit einem zweiten Bauteil (4) mittels eines Schraubbolzens (6) und einer mit dem Schraubbolzen (6) verbundenen Kontermutter (16), wobei der Schraubbolzen (6) durch einen im ersten Bauteil (2) befindlichen Aufnahmekanal (8) hindurch geführt ist, der Schraubbolzen (6) sich in seiner Verbindungsstellung an dem ersten Bauteil (2) und die Kontermutter (16) sich an dem ersten und/oder zweiten Bauteil (4) abstützt, **dadurch gekennzeichnet, dass** das erste Bauteil (2) Anlageflächen (18) zur Anlage von Oberflächen der Kontermutter (16), durch die eine Drehbewegung der Kontermutter (16) bei einer Drehbewegung des Schraubbolzens (6) formschlüssig blockiert ist, sowie eine stirnseitige Stützfläche (20) aufweist, am Außenumfang der Kontermutter (16) ein Vorsprung (22) ausgebildet ist, mit einer Anzugsbewegung des Schraubbolzens (6) der Vorsprung (22) auf die Stützfläche (20) zu beweglich ist und zwischen dem Vorsprung (22) und der Stützfläche (20) eine Sicherungsscheibe (24) mit in einem Vormontagezustand schräg zur Längsachse des Schraubbolzens (6) angestellten Scheibenflächen angeordnet ist, wobei die Sicherungsscheibe (24) in der Verbindungsstellung eine abgeflachte Form mit einem vergrößerten Außendurchmesser (26) aufweist.

2. Vorrichtung nach Anspruch 1, **dadurch gekennzeichnet, dass** die Anlageflächen (18) von den Seitenwänden eines Aufnahmeraums zur Aufnahme zumindest eines Teils der Kontermutter (16) gebildet sind.

3. Vorrichtung nach Anspruch 2, **dadurch gekennzeichnet, dass** der Aufnahmeraum exzentrisch zur Längsmittelachse des Schraubbolzens (6) im Aufnahmekanal (8) angeordnet ist und die Kontermutter (16) eine zum exzentrischen Aufnahmeraum passend geformte Umfangsform aufweist.

4. Vorrichtung nach einem der vorhergehenden Ansprüche, **dadurch gekennzeichnet, dass** der Vorsprung (22) als umlaufender Ring ausgestaltet ist.

5. Vorrichtung nach einem der vorhergehenden Ansprüche, **dadurch gekennzeichnet, dass** das erste Bauteil (2) im Verbindungsbereich mit dem zweiten Bauteil (4) ein Keilwellenprofil (14) aufweist, das in eine im zweiten Bauteil (4) befindliche Einstecköffnung (32) eingesteckt ist, das zweite Bauteil (4) eine in das Keilwellenprofil (14) passende Innenverzahnung (34) aufweist, und die Sicherungsscheibe (24) einen Außendurchmesser (26) aufweist, der im Vormontagezustand kleiner und in der Verbindungsstellung größer ist als der Abstand (38) gegenüberliegender Zahngründe (36) des Keilwellenprofils (14).

6. Vorrichtung nach einem der vorhergehenden Ansprüche, **dadurch gekennzeichnet, dass** das erste Bauteil (2) eine Nockenwelle einer Trommelbremse und das zweite Bauteil (4) ein Gestängesteller sind.

7. Verfahren zur Verbindung eines ersten Bauteils (2) mit einem zweiten Bauteil (4) mittels eines Schraubbolzens (6) und einer mit dem Schraubbolzen (6) verbundenen Kontermutter (16), wobei der Schraubbolzen (6) durch einen im ersten Bauteil (2) befindlichen Aufnahmekanal (8) hindurch geführt und mit der Kontermutter (16) verschraubt wird, wonach der Schraubbolzen (6) sich in seiner Verbindungsstellung an dem ersten Bauteil (2) und die Kontermutter (16) sich an dem zweiten Bauteil (4) abstützt, **dadurch gekennzeichnet, dass** beim Verschrauben des Schraubbolzens (6) mit der Kontermutter (16) diese von im ersten Bauteil (2) vorhandenen Anlageflächen (18) formschlüssig gegen eine Drehbewegung der Kontermutter (16) bei einer Drehbewegung des Schraubbolzens (6) blockiert wird, mit einer Anzugsbewegung des Schraubbolzens (6) ein am Außenumfang der Kontermutter (16) ausgebildeter Vorsprung (22) gegen eine stirnseitige Stützfläche (20) am ersten Bauteil (2) bewegt wird und bei dieser Bewegung eine zwischen dem Vorsprung (22) und der Stützfläche (20) angeordnete Sicherungsscheibe (24) mit in einem Vormontagezustand schräg zur Längsachse des Schraubbolzens (6) angeordneten Scheibenflächen außendurchmesservergrößernd gestaucht wird und die Sicherungsscheibe (24) in der Verbindungsstellung eine abgeflachte Form mit einem vergrößerten Außendurchmesser (26) aufweist.

8. Verfahren nach Anspruch 7, **dadurch gekennzeichnet, dass** das erste Bauteil (2) eine Nockenwelle einer Trommelbremse und das zweite Bauteil (4) ein Gestängesteller sind.

## Claims

1. Apparatus for connecting a first component (2) with a second component (4) by means of a screw bolt (6) and a counter-nut (16) connected with the screw bolt (6), wherein the screw bolt (6) is passed through an accommodation channel (8) situated in the first component (2), the screw bolt (6) supports itself on the first component (2) in its connection position, and the counter-nut (16) supports itself on the first and/or second component (4), **characterized in that** the first component (2) has contact surfaces (18) for contact with surfaces of the counternut (16), by means of which a rotational movement of the counter-nut (16) during a rotational movement of the screw bolt (6) is blocked with shape fit, as well as a face-side support surface (20), a projection (22) is configured on the outer circumference of the counter-nut (16), the projection (22) can be moved toward the support surface (20) with a tightening movement of the screw bolt (6), and a locking disk (24) having disk surfaces set at a slant relative to the longitudinal axis of the screw bolt (6) in a pre-installation state is disposed between the projection (22) and the support surface (20), wherein the locking disk (24) has a flattened shape with an enlarged outside diameter (26) in the connection position.

2. Apparatus according to claim 1, **characterized in that** the contact surfaces (18) are formed by the side walls of an accommodation space for accommodating at least a part of the counter-nut (16).

3. Apparatus according to claim 2, **characterized in that** the accommodation space is disposed in the accommodation channel (8) eccentrically relative to the longitudinal center axis of the screw bolt (6), and that the counter-nut (16) has a circumference shape that is shaped to match the eccentric accommodation space.

4. Apparatus according to one of the preceding claims, **characterized in that** the projection (22) is configured as a circumferential ring.

5. Apparatus according to one of the preceding claims, **characterized in that** the first component (2) has a spline shaft profile (14) in the connection region with the second component (4), which profile is inserted into an insertion opening (32) situated in the second component (4), the second component (4) has an inner tooth system (34) that fits into the spline shaft profile (14), and the locking disk (24) has an outside diameter that is smaller in the pre-installation state and greater in the connection position than the distance (38) between opposite tooth roots (36) of the spline shaft profile (14).

6. Apparatus according to one of the preceding claims, **characterized in that** the first component (2) is a camshaft of a drum brake and the second component (4) is a slack adjuster.

7. Method for connecting a first component (2) with a second component (4) by means of a screw bolt (6) and a counter-nut (16) connected with the screw bolt (6), wherein the screw bolt (6) is passed through an accommodation channel (8) situated in the first component (2) and screwed together with the counter-nut (6), and after that, the screw bolt (6) supports itself on the first component (2) in its connection position and the counter-nut (16) supports itself on the second component (4), **characterized in that** when the screw bolt (6) is screwed together with the counter-nut (16), the latter is blocked, with shape fit, by means of contact surfaces (18) present in the first component (2), to prevent a rotational movement of the counter-nut (16) during a rotational movement of the screw bolt (6), a projection (22) configured on the outer circumference of the counter-nut (16) is moved toward a face-side support surface (20) on the first component (2) with a tightening movement of the screw bolt (6), and during this movement, a locking disk (24) having disk surfaces set at a slant relative to the longitudinal axis of the screw bolt (6) in a pre-installation state, disposed between the projection (22) and the support surface (20), is compressed, increasing its outside diameter, and the locking disk (24) has a flattened shape with an enlarged outside diameter (26) in the connection position.

8. Method according to claim 7, **characterized in that** the first component (2) is a camshaft of a drum brake and the second component (4) is a slack adjuster.

## Revendications

1. Dispositif de liaison d'un premier composant (2) avec un second composant (4) à l'aide d'un boulon fileté (6) et d'un contre-écrou (16) relié au boulon fileté (6), le boulon fileté (6) traversant un canal de réception (8) se trouvant dans le premier composant (2), le boulon fileté (6) s'appuyant dans sa position de liaison contre le premier composant (2) et le contre-écrou (16) contre le premier et/ou second composant (4), **caractérisé en ce que** le premier composant (2) présente des surfaces d'installation (18) pour l'installation de surfaces du contre-écrou (16), par lesquelles un mouvement de rotation du contre-écrou (16) est bloqué par complémentarité de formes lors d'un mouvement de rotation du boulon fileté (6), ainsi qu'une surface d'appui côté avant (20), une saillie (22) est réalisée sur la périphérie extérieure du contre-écrou (16), la saillie (22) est mobile avec un mouvement d'attraction du boulon fileté (6) vers la surface d'appui (20) et une rondelle d'arrêt (24) est disposée entre la saillie (22) et la surface d'appui (20) avec des surfaces de rondelle placées dans un état de prémontage en biais par rapport à l'axe longitudinal du boulon fileté (6), la rondelle d'arrêt (24) présentant dans la position de liaison une forme aplatie avec un diamètre extérieur agrandi (26).

2. Dispositif selon la revendication 1, **caractérisé en ce que** les surfaces d'installation (18) sont formées par les parois latérales d'un espace de réception pour la réception au moins d'une partie du contre-écrou (16).

3. Dispositif selon la revendication 2, **caractérisé en ce que** l'espace de réception est disposé de manière excentrée par rapport à l'axe médian longitudinal du boulon fileté (6) dans le canal de réception (8) et le contre-écrou (16) présente une forme périphérique adaptée à l'espace de réception excentrique.

4. Dispositif selon l'une quelconque des revendications précédentes, **caractérisé en ce que** la saillie (22) est configurée comme un anneau périphérique.

5. Dispositif selon l'une quelconque des revendications précédentes, **caractérisé en ce que** le premier composant (2) présente, dans la zone de liaison avec le second composant (4), une cannelure (14) qui est insérée dans une ouverture d'enfichage (32) se trouvant dans le second composant (4), le second composant (4) présente une denture intérieure (34) s'ajustant dans la cannelure (14), et la rondelle d'arrêt (24) présente un diamètre extérieur (26) qui est plus petit dans l'état de prémontage et plus grand dans la position de liaison que la distance (38) entre des bases de dent opposées (36) de la cannelure (14).

6. Dispositif selon l'une quelconque des revendications précédentes, **caractérisé en ce que** le premier composant (2) est un arbre à came d'un frein à tambour et le second composant (4) est un régleur automatique de timonerie.

7. Procédé de liaison d'un premier composant (2) avec un second composant (4) à l'aide d'un boulon fileté (6) et d'un contre-écrou (16) relié au boulon fileté (6), le boulon fileté (6) traversant un canal de réception (8) se trouvant dans le premier composant (2) et étant vissé avec le contre-écrou (16), après quoi le boulon fileté (6) s'appuie dans sa position de liaison contre le premier composant (2) et le contre-écrou (16) contre le second composant (4), **caractérisé en ce que** lors du vissage du boulon fileté (6) avec le contre-écrou (16), celui-ci est bloqué par des surfaces d'installation (18) présentes dans le premier composant (2) par complémentarité de formes contre un mouvement rotatif du contre-écrou (16) lors d'un mouvement de rotation du boulon fileté (6), une saillie (22) réalisée sur la périphérie extérieure du contre-écrou (16) est déplacée avec un mouvement d'attraction du boulon fileté (6) contre une surface d'appui (20) côté avant sur le premier composant (2) avec un mouvement d'attraction du boulon fileté (6) et lors de ce mouvement, une rondelle d'arrêt (24) disposée entre la saillie (22) et la surface d'appui (20) est aplatie avec des surfaces de rondelle disposées dans un état de prémontage en biais par rapport à l'axe longitudinal du boulon fileté (6) de manière à agrandir le diamètre extérieur et la rondelle d'arrêt (24) présente, dans la position de liaison, une forme aplatie avec un diamètre extérieur agrandi (26).

8. Procédé selon la revendication 7, **caractérisé en ce que** le premier composant (2) est un arbre à came d'un frein à tambour et le second composant (4) est un régleur automatique de timonerie.
